(19) Europäisches Patentamt

European Patent Office

Office européen des brevets

(11) **EP 0 876 625 B1**

(12) **EUROPEAN PATENT SPECIFICATION**

(45) Date of publication and mention
of the grant of the patent:
**17.07.2002 Bulletin 2002/29**

(51) Int Cl.⁷: **G01S 17/02**, G02B 6/14

(21) Application number: **97901150.9**

(86) International application number:
**PCT/GB97/00166**

(22) Date of filing: **22.01.1997**

(87) International publication number:
**WO 97/27500 (31.07.1997 Gazette 1997/33)**

(54) **RADIATION FIELD ANALYZER**

STRAHLUNGSFELD-ANALYSEVORRICHTUNG

ANALYSEUR DE CHAMP DE RAYONNEMENTS

(84) Designated Contracting States:
**BE CH DE FR GB IT LI NL**

(30) Priority: **26.01.1996 GB 9601645**
**19.07.1996 GB 9615240**

(43) Date of publication of application:
**11.11.1998 Bulletin 1998/46**

(73) Proprietor: **QinetiQ Limited**
**London, SW1 6TD (GB)**

(72) Inventors:
• **JENKINS, Richard, Michael**
**Malvern, Worcs. WR14 3PS (GB)**
• **DEVEREUX, Robert, William, John**
**Malvern, Worcs. WR14 3PS (GB)**

(56) References cited:
EP-A- 0 352 976          GB-A- 2 173 663
US-A- 4 305 666          US-A- 4 340 304

**Description**

This invention relates to radiation field analyzers.

When a laser source illuminates a scene with coherent radiation, the return field contains a significant amount of information about its three dimensional structure and the nature of its surface. The analysis of such fields provides an important basis for target search, tracking and non-cooperative identification procedures. Single aperture single detector heterodyne systems with fundamental mode local oscillators are only able to detect the fundamental mode component of the field returned from a scene with the result that a considerable amount of potentially useful information is lost. In the microwave domain, this problem is overcome by using an array of sub-apertures. The radiation arriving at each sub-aperture is coherently detected with a separate local oscillator source and detector. In this manner, the field across the array is measured in a piece-wise manner. Because of the much shorter wavelength of optical radiation and the different technologies involved, the implementation of sub-aperture receiver array concepts in the analysis of field returns from scenes illuminated with laser radiation has proved difficult in practice.

US Pat. No. US-A-4340304 discloses an interferometric system in which two coherent but orthogonally polarised beams are separately directed into a test area and a reference arm and, upon their return, recombined, and polarisation filtered so that they interfere to provide an interference pattern. The pattern is detected in a plane at a plurality of individual detection points; an electrical signal is thereby generated for each point. The signals are processed to obtain optical path difference information at a resolution higher than the wavelength of the beams used. The system is arranged for single mode operation.

It is an object of the invention to provide an alternative form of radiation field analyzer.

The present invention provides a radiation field analyzer for analysing at least partially coherent radiation received from a scene, said analyzer incorporating a radiation combiner for providing interference signals and detecting means for detecting the interference signals, characterised in that:

   (i) the combiner is arranged to combine said received radiation from the scene with each of a plurality of orthogonal spatial radiation mode fields to provide the interference signals; and
   (ii) the detecting means is arranged to provide an analysis of the radiation from the scene in the form of a spatial mode spectrum.

In order to generate the interference signals, a degree of coherency must exist between the received radiation and the orthogonal spatial radiation mode signals. The term "scene" is used in a generic sense to indicate any object in the field of view, including both a ground-scene and individual targets or objects such as aircraft in the sky. The radiation from a scene may be characterized in terms of an orthogonal set of free space modes (e.g. Hermite-Gaussian) or those of a multimode waveguide (e.g. the hybrid $EH_{mn}$ modes of a square sectioned waveguide where m and n are modal integer numbers greater than or equal to 1). In terms of a waveguide mode analysis the field from the scene, $E_{input}$, is imaged on the entrance aperture of the waveguide where it excites a spectrum of modes. This process can be expressed as:

$$E_{input} = \sum A_{mn} \exp\{i\phi_{mn}\}EH_{mn}.$$

Here $A_{mn}$ and $\phi_{mn}$ are the modulus and phase of the complex amplitude of the mn$^{th}$ waveguide mode $EH_{mn}$ respectively.

For example, for the general case of lossless rectangular waveguides of cross-section 2a×2b the field amplitude of the $EH_{mn}$ mode would have the form:

$$EH_{mn}(x, y, z) = \frac{1}{\sqrt{ab}} \cos[m\pi x/(2a)] \cos[n\pi y/(2b)] \exp(-\beta_{mn} z)$$

for m and n odd and:

$$EH_{mn}(x, y, z) = \frac{1}{\sqrt{ab}} \sin\left[m\pi x/(2a)\right] \sin\left[n\pi y/(2b)\right] \exp\left(i\,\beta_{mn}\,z\right)$$

for m and n even, where:

$$\beta_{mn} = \frac{2\pi}{\lambda_c}\left[1 - \frac{1}{2}\left\{\left(\frac{m\lambda_c}{4a}\right)^2 + \left(\frac{n\lambda_c}{4b}\right)^2\right\}\right]$$

and $\lambda_c$ is the wavelength of a perfect plane wave in the core of the guide.

By mixing the spectrum of modes excited in the waveguide by the radiation received from a scene with known modes produced by a tunable mode generator, which is also frequency offset from the radiation from the scene, the relative amplitudes and phases of the modes excited by the radiation from the scene in the waveguide can be determined by appropriate measurements of the beat signals produced using a detector.

The invention provides the advantage that the modes excited by the radiation from the scene are used to categorise the scene. In consequence, systems based on the analyzer of the invention may be set to register when certain radiation modes are detected and hence when certain particular targets or objects are present without recourse to a human operator. Moreover, as a scene is categorised by modes, the scene information may be represented by a list of modes present in the scene radiation, together with the amplitudes and phases of those modes.

In a preferred embodiment the scene radiation modes and generated modes are combined in a multimode waveguide structure. Preferably, the generated modes are produced by a generator (or mode converter) which is based on injecting two plane waves (or two waves which approximate two perfect plane waves as closely as possible) at suitable angles and with suitable phases into a multimode waveguide .

Alternatively, the mode generation may be achieved by a laser source providing laser radiation to the multimode waveguide structure. In this case the laser source may be frequency locked and frequency offset from another laser which provides for scene illumination.

The radiation field analyzer may be one of several analyzers in a serial or parallel array. Each analyzer may then be arranged for analysis of a given waveguide mode or series of modes. The analyzers may be fed from one tunable mode converter; alternatively each analyzer in the array may have its own mode generator or mode converter.

Preferentially the radiation field analyzer is provided with a computer system for controlling the modes generated by a tunable mode generator or mode converter and also for analysing the modal spectrum measured by the analyzer.

In a further aspect, a radiation field analyzer may be arranged as part of a laser radar system.

In order that the invention might be more fully understood, embodiments thereof will now be described, by way of example only, with reference to the accompanying drawings in which:-

Figure 1          is a schematic sectional plan view of a radiation field analyzer of the invention;

Figure 2          is a perspective view of a multimode waveguide structure incorporated in the radiation field analyzer of Figure 1;

Figure 3          is a perspective view of a tunable mode converter of the Figure 1 analyzer;

Figure 4          illustrates radiation coupling to modes of a rectangular waveguide as a function of radiation input direction;

Figure 5          illustrates relative phase offsets between the modes of Figure 4;

Figure 6          is a schematic view of radiation propagation through a beam splitter of the radiation field analyzer of Figure 1;

Figure 7          is a series of illustrations of waveguide modes produced by the Figure 3 mode converter;

Figure 8          shows profiles of radiation modes produced by the Figure 3 mode converter;

Figures 9 and 10    show theoretical predictions of the performance of the Figure 1 radiation field analyzer;

Figure 11    is an experimental measurement of the theoretical result illustrated in Figure 9;

Figure 12    is an experimental measurement of the theoretical result illustrated in Figure 10; and

Figure 13    is a schematic drawing of an analyzer of the invention incorporated into a laser radar system.

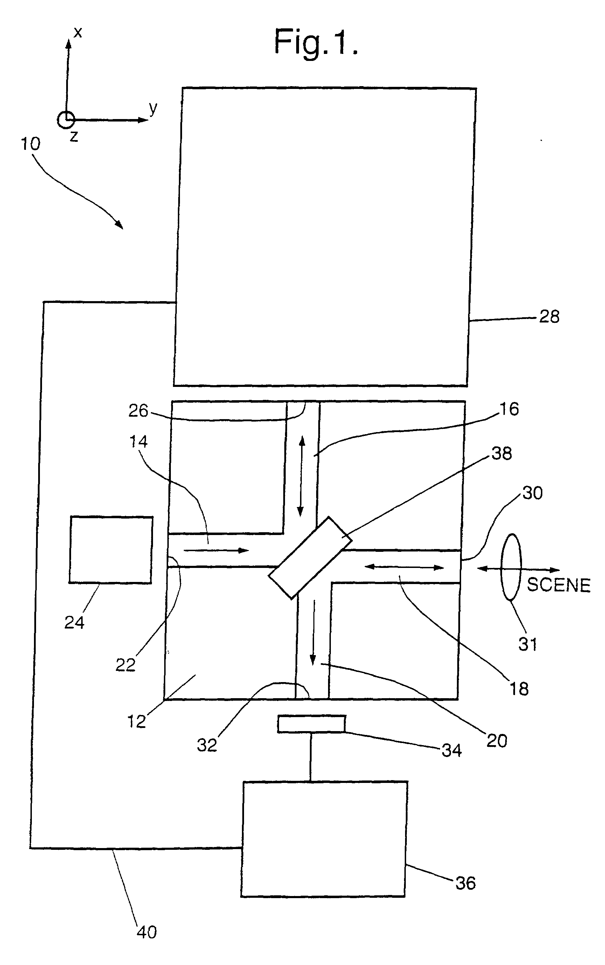

Referring to Figure 1 there is shown a schematic view of a radiation field analyzer indicated generally by 10. It incorporates a multimode waveguide structure 12 which has four substantially identical multimode waveguides: a radiation input waveguide 14, a mode conversion waveguide 16, a radiation transmit/receive waveguide 18 and a detector waveguide 20.

The input waveguide 14 has an input aperture 22. A $CO_2$ laser source 24 is arranged to direct radiation onto an input aperture 22. Mode conversion waveguide 16 has an aperture 26. A tunable mode converter 28 is situated at the aperture 26. Mode converter 28 will be described in more detail later. It is arranged to receive fundamental mode radiation from conversion waveguide 16 and convert it to radiation of any one of a number of desired modes. With the radiation in the desired mode it is then transmitted back to the conversion waveguide 16. In addition to converting the radiation to that of a require mode, a phase modulation or frequency offset of the radiation is also generated in the mode converter.

The transmit/receive waveguide 18 has an aperture 30. Radiation from waveguide 18 is coupled to free space modes outside the multimode waveguide structure 12 via the aperture 30 and a lens system 31. Also, radiation in free space modes from external objects is coupled to the transmit/receive waveguide 18 in waveguide modes via the lens system 31 and the aperture 30.

The detector waveguide 20 has an aperture 32. A detector system 34 is arranged to detect radiation emerging from detector waveguide 20 via aperture 32. Detector system 34 is connected to a computer system 36 for recordal and analysis of the radiation emergent from detector waveguide 20.

The multimode waveguide structure 12 incorporates a beam splitter 38 situated at ends of waveguides 14 to 20 opposite to apertures 22, 26, 30 and 32. The beamsplitter 38 is arranged for substantially equal reflection and transmission of incident radiation (i.e. it is a 50:50 beamsplitter). It is arranged for reflection of radiation from input waveguide 14 into conversion waveguide 16 and transmission of radiation from input waveguide 14 into transmit/receive waveguide 18. Similarly, radiation from conversion waveguide 16 is transmitted to detector waveguide 20, and also reflected to input waveguide 14. Also, radiation from transmit/receive waveguide 18 is reflected to detector waveguide 20 and also transmitted to input waveguide 14.

The operation of the radiation field analyzer 10 will now be described in general terms, a more detailed theoretical analysis being given later. Fundamental mode radiation from the laser source 24 is arranged to couple to the input waveguide 18 in the $EH_{11}$ mode, i.e. as fundamental mode radiation. The fundamental mode radiation propagates along the input waveguide 14 to the beamsplitter 38. Substantially 50% of the radiation is transmitted through the beamsplitter 38 to the transmit/receive waveguide 18. The remaining substantially 50% of the radiation is reflected to the conversion waveguide 16. The radiation in both waveguides 16 and 18 propagates in the fundamental mode to respective apertures 26 and 30.

The radiation which emerges from aperture 30 couples essentially to the $TEM_{00}$ free-space radiation mode. It illuminates a scene (not shown) and radiation reflected from the scene is coupled into the transmit/receive waveguide 18, via aperture 30. The radiation couples into a number of waveguide modes, of the form $EH_{mn}$, where m and/or n are greater than or equal to one.

The fundamental mode radiation which emerges from aperture 26 enters the tunable mode converter 28. The converter 28 converts fundamental mode $EH_{11}$ radiation into higher order waveguide modes $EH_{mn}$. The converter 28 carries out the mode conversion by generating modes in a controlled sequence. The converter 28 is controlled by the computer 36, via a control line 40. The converter 28 generates all modes in the range $EH_{11}$ to $EH_{mn}$. At any one particular setting, the mode converter only generates a single mode. With m = n = 10 the resolution would be equivalent to a prior art radiation field analyzer having a 10 by 10 array of sub-apertures.

The modes generated by the converter are transmitted to the conversion waveguide 16 via aperture 26. A phase modulator in the mode converter imposes a sinusoidal phase modulation on the generated modes. In one implementation the phase modulator takes the form of a fully reflecting mirror mounted on a piezoelectric stack. The stack is driven by a sinusoidally varying voltage which produces a time dependent axial motion of the mirror of the form $\cos(\omega t)$ where $\omega$ is the drive frequency. The amplitude of the drive voltage is arranged so that the limit of the linear motion is $\lambda/2$ where $\lambda$ is the wavelength of a plane wave in the core of the guide. This motion of the mirror imposed a sinusoidally varying phase shift $(0 \rightarrow 360°)$ on the beam reflected from the mirror.

The phase modulated radiation from the tunable mode converter 28 propagates along the conversion waveguide 16 towards the beamsplitter 38. The radiation from the scene or object which is coupled into the transmit/receive waveguide 18 propagates along waveguide 18 towards the beamsplitter 38. The radiation from the converter 28 and the radiation from the scene or object are mixed via the beamsplitter 38 and thence transmitted to the detector 34.

Because of the orthogonality of the waveguide modes the peak-to-peak amplitude of the power variation measured by the detector will only be non-zero when the $EH_{mn}$ mode from the scene or object equates to the $EH_{mn}$ mode generated by the tunable mode converter. For example, when the mode converter 28 generates the $EH_{31}$ mode, there will only be a finite power variation in the transmit/receive waveguide 18 when the radiation from the scene also results in excitation of the mode $EH_{31}$. The resulting sinusoidal variation in the power is recorded by the computer 36 and used to deduce the modulus and phase of the $EH_{31}$ component in the field from the scene. Consequently, from knowledge of the mode settings and the relative amplitudes and phases of the modes generated by the tunable mode converter 28 and of the sinusoidal power measurements made by the detector 34, the complex amplitudes of all the $EH_{mn}$ radiation modes present in the radiation received from the scene can be determined.

This enables the radiation field from a scene to be characterized according to the $EH_{mn}$ modes excited in the transmit/receive waveguide. The higher the order of modes used in the analysis, the greater the resolution by which the scene radiation field can be characterized. Lower order modes may provide information on the bulk characteristics of the scene; for instance the presence of $EH_{21}$ mode, with two intensity peaks, indicates the presence of two main vertical components in the scene. Conversely, higher order modes such as the mode $EH_{10,10}$ provide information about smaller scale detail of the scene. Consequently, scene radiation fields can be characterized in terms of the $EH_{mn}$ modes which it excites. Scene radiation fields may be calibrated; i.e. a known object field may be characterized in terms of the $EH_{mn}$ modes which it produces, and the analyzer 10 may then be arranged to register when the $EH_{mn}$ modes corresponding to that object are received by the detector 34. The analyzer 10 may then be used as the basis of a surveillance system in which objects to be detected by the analyzer 10 are initially calibrated in terms of the $EH_{mn}$ modes which they excite.

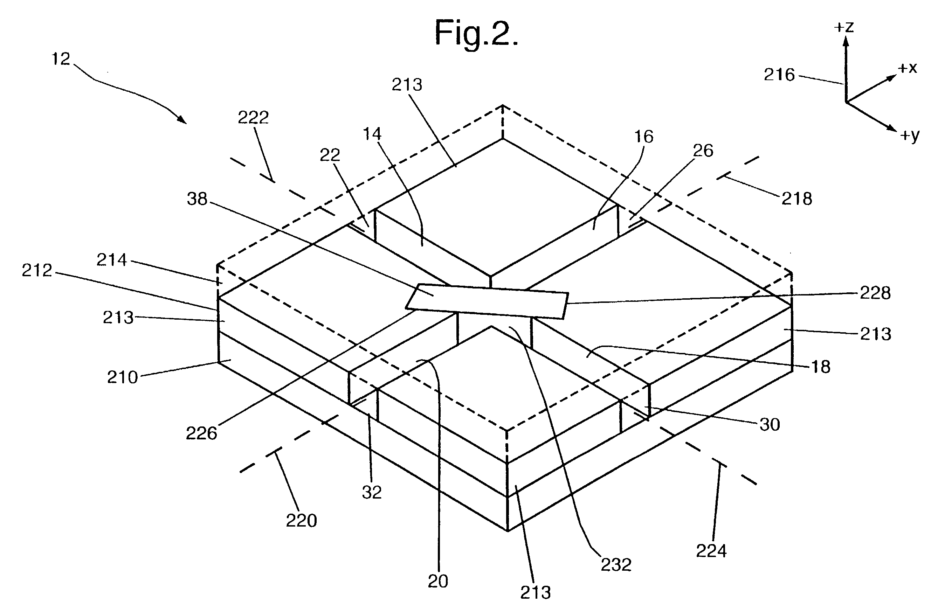

Figure 2 is a perspective view of the multimode waveguide structure 12 of Figure 1. The multimode waveguide structure 12 is fabricated from alumina. It is composed of three layers: a substrate layer 210 forming the lower walls of the hollow waveguides, a waveguide layer 212 comprising an arrangement of tiles 213 forming the vertical walls of the hollow waveguides, and a top layer 214 indicated by dotted lines and forming the upper walls of the hollow waveguides.

The waveguide layer 212 defines the shape of the input waveguide 14, the mode conversion waveguide 16, the radiation transmit/receive waveguide 18 and the detector waveguide 20 shown in Figure 1. Each of the resulting hollow waveguides 14 to 20 is of constant square cross-section of side 2a where a is equal to one millimetre.

The dispositions of the waveguides 14 to 20 will now be described with reference to axes 216. The mode conversion waveguide 16 and detector waveguide 20 have respective central longitudinal axes 218 and 220 extending in the x-direction. Axis 220 is offset from axis 218 by 0.93 mm in the positive y-direction. Similarly, input waveguide 14 and transmit/receive waveguide 18 have central longitudinal axes 222 and 224 respectively extending in the y-direction. Axis 222 is offset from axis 224 a by 0.93 mm in the positive x-direction.

The waveguide layer 212 also has two slots 226 and 228. These are situated respectively between waveguides 14 and 20, and waveguides 16 and 18. The beamsplitter 38 is situated in slots 226 and 228 at a common intersection 232 of the waveguides 14 to 20. The beamsplitter is fabricated from zinc selenide and has a thickness of 1.9 mm. A multidielectric coating is evaporated onto its surface allowing 50% of the incident light to be transmitted and 50% reflected.

The waveguides 14 to 20 have respective apertures 22, 26, 30 and 32 at the end of the waveguide layer 212. The laser source 24 is centrally located on longitudinal axis 222. Tunable mode converter 28 is centrally located on axis 218, 1.0 millimetre distant from aperture 26 of conversion waveguide 16. The detector 34 is a cooled 4.0 mm square chip of cadmium mercury telluride (CMT) which is located centrally on axis 220; it is positioned so as to capture all of the radiation emitted from the aperture 32.

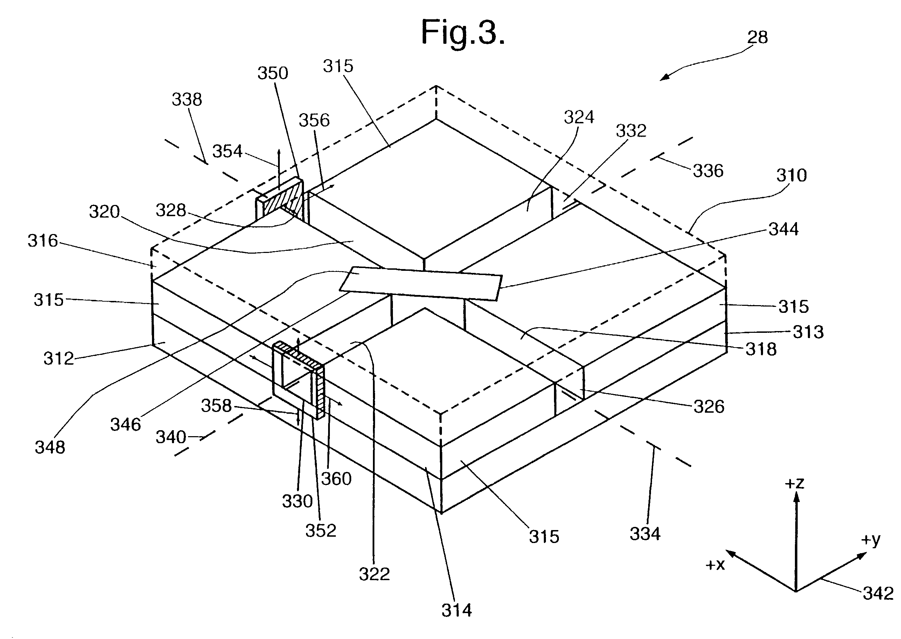

Figure 3 shows a perspective view of the tunable mode converter 28 of Figure 1. It incorporates a multimode waveguide structure 310 comprising four hollow waveguides. The structure 310 comprises three layers 312, 314 and 316. Layer 312 consists of a substrate plate 313 which forms the lower walls of the hollow waveguides, layer 314 comprises an arrangement of tiles 315 which form the vertical walls of the hollow waveguides and layer 316, indicated by dashed lines, is a top plate 317 which forms the upper walls of the hollow waveguides.

The arrangement of tiles 315 forms four multimode waveguides 318, 320, 322 and 324. Waveguide 318 is an input waveguide; waveguide 320 is a first mode conversion waveguide; waveguide 322 is a second mode conversion waveguide; and waveguide 324 is a mode checking waveguide. Each waveguide is of square cross-section of side 2.0 mm. Each waveguide 318 to 324 has a respective aperture 326, 328, 330 and 332 at the corresponding edge of the layer 314.

The waveguides 318 to 324 have corresponding central longitudinal axes 334, 338, 340 and 336. Axis 338 is offset from axis 334 by 0.93 mm in the positive y-direction, as indicated by axes 342. Similarly, axis 336 is offset from axis 340 by 0.93 mm in the positive x-direction. In operation, axis 334 is parallel and coaxial with the axis 218 of Figure 2.

The layer 314 has two slots 344 and 346, extending throughout its thickness. Slot 334 is situated at the intersection of waveguides 318 and 324; and slot 346 at the intersection of waveguides 320 and 322. The slots 334 and 346 each support a zinc selenide beamsplitter 348, of thickness 1.96 mm.

The first and second mode conversion waveguides 320 and 322 have respective associated mode conversion mirrors 350 and 352. These are located centrally along axis 336 and 338, and a distance of approximately 1.0 mm away from apertures 328 and 330. The mirrors 350 and 352 are mounted on respective motorised mounts (not shown). The mounts enable the mirrors 350 and 352 to be rotated about selected axes. Mirror 350 is rotatable about central axes 354 and 356, which are respectively a vertical axis parallel to the z-direction, and a horizontal axis parallel to the y-direction. Mirror 352 is rotatable about central axes 358 and 360, which are respectively parallel to the z-direction and to the x-direction. Additionally, the separation between mirrors 350 and 352 and their associated waveguide apertures 328 and 330 can be varied by linear motors on the mounts. Movement of the mirrors is controlled by computer 36 of Figure 1.

The mode converter 28 is located adjacent to the multimode waveguide structure 12 such that light from aperture 26 couples into aperture 326 of input waveguide 318 of the converter 28.

The operation of the mode converter 28 will now be described. Fundamental mode radiation entering aperture 326 propagates along input waveguide 318 to beamsplitter 348. As beamsplitter 348 is a 50:50 beamsplitter, essentially half the incident radiation is transmitted through it to the first mode conversion waveguide 320. The substantial part of the remainder is reflected into the second mode conversion waveguide 322. The radiation propagates along waveguides 320 and 322, and emerges from apertures 328 and 330. The radiation is incident on mirrors 350 and 352, and reflected back towards the apertures 328 and 330.

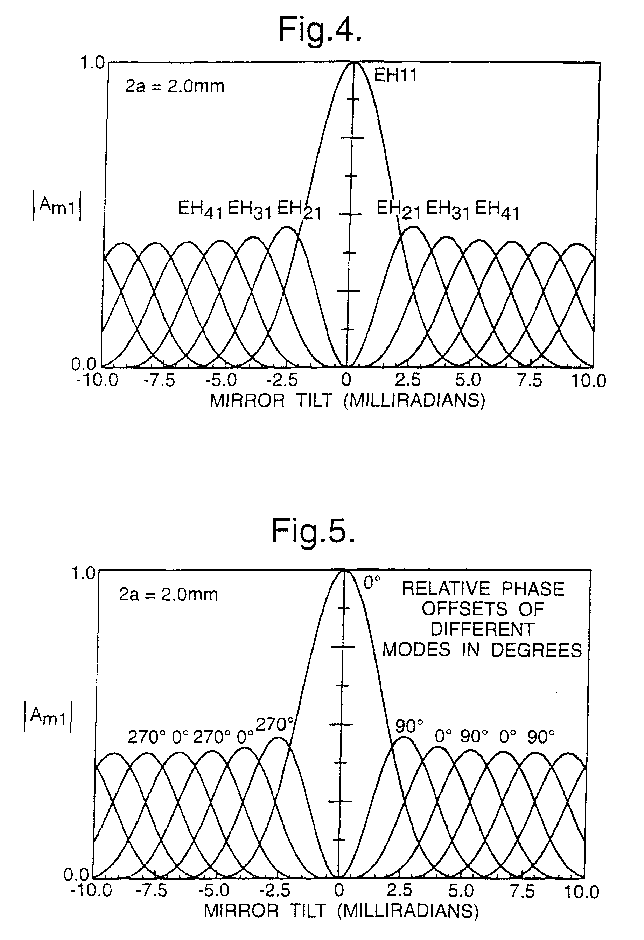

The coupling of the reflected radiation from mirrors 350 and 352 into waveguides 320 and 322 is dependent on the angles of tilt of the mirrors 350 and 352. Figure 4 shows a graph of the variation of magnitude of the moduli of the modes coupled into the waveguide 320 after reflection from mirror 350. The same graph applies for radiation coupled from mirror 352 to waveguide 322. It can be seen that the moduli of the waveguide modes coupled into the waveguides varies with tilt angle of the respective mirror. Positive tilts relate to clockwise rotations of the mirrors 350 and 352 about respective vertical axes (i.e. z-axes) 358 and 360. Negative tilts refer to anticlockwise rotations. The graph of Figure 4 is for $EH_{mn}$ modes where n is equal to 1.

From the graph it can be seen that at zero tilt then only $EH_{11}$ radiation mode is coupled to the respective waveguides. However, at increasing positive tilts the modulus of the $EH_{11}$ mode decreases until it becomes substantially zero at 11.0 milliradians tilt. Conversely, the modulus of, the $EH_{21}$ mode increases rapidly at positive tilts, to a maximum of about 2.5 milliradians tilt. The maximum amplitude of the modulus of the mode $EH_{21}$ does not, however, reach a value equivalent to that of the $EH_{11}$ mode; rather it is restricted to about two-thirds of that value.

At higher positive tilts the other higher order modes: $EH_{31}$, $EH_{41}$, $EH_{51}$ etc., also begin to be coupled to the respective waveguides. These modes have maximum amplitudes at about 4.0, 5.5 and 7.0 milliradians of mirror tilt respectively. Their maxima are substantially the same as that of $EH_{21}$ mode. For negative mirror tilts the moduli of all modes are the same as for positive tilts, however their phases are different. The mirror tilt required to maximize the amplitude of any given mode, except $EH_{11}$ (for which the maxima is achieved with zero tilt), can be predicted to a good approximation by the formula: $\theta = m\lambda_c/8a$, where '$\theta$' is the tilt in radians, 'm' is the mode number of the $EH_{m1}$th mode, '$\lambda_c$' is the wavelength of a plane wave in the core of the guide (in the case of hollow waveguides, the wavelength of a plane wave in free space), and a is the half width of the waveguide. For example, if m = 3, $\lambda$ = 10.6 μm, and a = 1.0 mm, then $\theta$ = 0.003975 radians, i.e. approximately 4 milliradians in good agreement with the numerical predictions of Figure 4.

Whilst Figure 4 highlights how the moduli of the excited modes varies as a function of mirror tilt Figure 5 illustrates how, in addition, the phase offsets between the modes are also a function of mirror tilt. It can be seen that for positive mirror tilts the antisymmetric modes $EH_{21}$ and $EH_{41}$ are offset by 90° (or $\pi/2$) from the symmetric modes $EH_{11}$, $EH_{31}$ and $EH_{51}$. Conversely, for negative mirror tilts the antisymmetric modes are offset by 270° ($3\pi/2$).

From Figure 4 and 5 it can be seen that for any particular mirror tilt angle a multiplicity of modes are coupled to the respective waveguide. For example, for a positive tilt of 4 milliradians there are contributions from modes $EH_{11}$, $EH_{21}$, $EH_{31}$, $EH_{41}$ and $EH_{51}$. However, the magnitudes of the moduli of the modes are different. The modulus of the fundamental mode is about 0.05, as is that of $EH_{51}$, the moduli of modes $EH_{21}$ and $EH_{41}$ is approximately 0.25, whilst the modulus of $EH_{41}$ is maximized at a value of 0.4.

For the analysis of radiation from a scene by the technique outlined, it is desirable that the mode converter 28 should generate substantially single $EH_{mn}$ modes at any one time. If it generates multiple modes then these may beat with multiple modes from the scene radiation field to be analyzed, causing multiple beat signals. More sophisticated signal processing techniques would then be required in order to determine which modes were present in the radiation detected by detector 34. If single modes could be generated by the mode converter the analysis could be much simpler.

With the aim of generating essentially pure modes, the symmetric and antisymmetric modes may be separated so that approximately only one mode is produced from the mode converter 28 at any one time for any given mirror tilt. The modes are separated by virtue of the coherent mixing process at the beamsplitter 348.

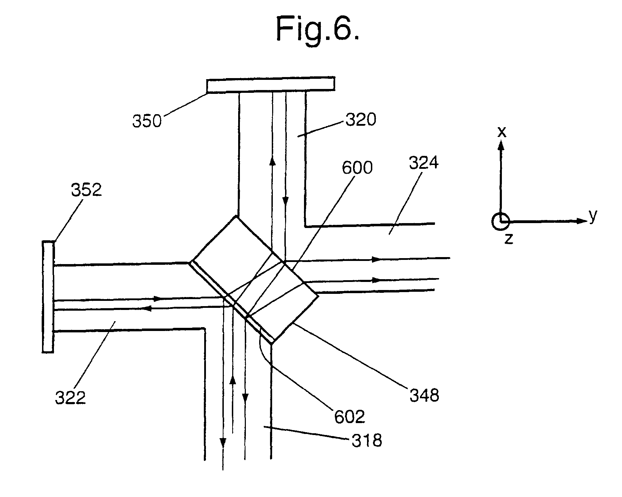

Figure 6 shows a schematic view of the propagation of radiation through the beamsplitter. The beamsplitter 348 has two faces 600 and 602. Face 600 has an anti-reflection coating whilst face 602 has a multidielectric coating providing 50% transmission and 50% reflection. Consequently radiation propagating towards the beamsplitter 348 is transmitted through and reflected from the face 602 to waveguides 320 and 322 respectively in equal ratios. The reflection actually occurs at the interface of the high refractive index beamsplitter 348 and low refractive index air adjacent to it. For radiation approaching this interface from mirror 352 the radiation is travelling in a low refractive index medium and is reflected at the air interface with the high refractive index medium of the beamsplitter 348. The radiation undergoing this reflection does not undergo a phase change. Conversely, the radiation approaching the interface from the mirror 350 is travelling in the high index medium of the beam splitter and is reflected from the interface with the lower refractive index medium - i.e. the air surrounding the beamsplitter 348. The radiation undergoing this reflection undergoes a $\pi$ radian, or one hundred and eighty degree phase shift.

Following the coupling of radiation into waveguides 320 and 322, reflection from the mirrors 350 and 352 once again results in radiation being reflected from, and transmitted through, the point 604. Consequently the radiation from the mirrors 350 and 352 can be combined at point 604 and can couple modes into both of the waveguides 318 or 324. For the intensity of a given $EH_{mn}$ mode to be maximized in output waveguide 318 the phase difference between radiation from mirrors 350 and 352, via waveguides 320 and 322 and the at the interface 604, must satisfy the following:-

$$\phi_{mn350} - \phi_{mn352} = p2\pi,$$

where p is an integer, $\phi_{mn350}$ is the phase of the $EH_{mn}$ mode injected into waveguide 318 from mirror 350, and $\phi_{mn352}$ is the phase of the same mode injected into waveguide 318 from mirror 352.

In order to achieve this situation for any given mode the mirror 350 is arranged for lateral movement in the x-direction (axial movement along the guide axis) over a distance x. This movement produces a phase change $\phi_c$ in $\phi_{mn350}$, given by:

$$\phi_c = 2x. \frac{2\pi}{\lambda_{mn}} ,$$

where $\lambda_{mn}$ is the wavelength of the $EH_{mn}$ mode. As the laser source 24 is a $CO_2$ laser, the wavelength of the free space radiation is 10.6 μm. To obtain a phase change $\phi_c$ would require a movement $x = \lambda_{mn}\phi_c/4\pi$. In practice, in order that like modes are in phase, $\phi_c$ would be adjusted so that ($\phi_{mn352} - \phi_{mn350}$) would be an integral multiple of $2\pi$ radians.

From Figure 5, it can be seen that for positive tilts of mirror 350 about the z-axis (see Figure 3) the antisymmetric modes $EH_{21}$, $EH_{41}$, $EH_{61}$ etc., are offset by 90° from the symmetric modes, whilst for negative tilts of the mirror 350 about the z-axis the antisymmetric modes $EH_{21}$, $EH_{41}$, $EH_{61}$ etc., are offset by 270° from the symmetric modes. Considering the situation where mirror 350 has a positive tilt, and mirror 352 has a positive tilt (which following reflection from the beamsplitter 348 equates to an effective negative tilt in output guide 318 as far as the relative phases of the modes are concerned), if by the application of an appropriate phase shift, applied via the piezo-electrically controlled displacement of mirror 350 it is arranged that the symmetric modes transmitted by the beamsplitter 348, from mirror 350 into output guide 318, are in phase with the symmetric modes reflected by the beamsplitter 348, from mirror 352 into output guide 318; then these symmetric modes will constructively interfere at point 604, and produced a beam of symmetric modes which will be coupled into waveguide 318. Conversely with the same mirror tilts the transmitted and reflected antisymmetric modes from mirrors 350 and 352 will be out of phase at point 604 and will destructively interfere in the outgoing field of waveguide 318. Simultaneously, these antisymmetric modes will be in phase in the outgoing field of waveguide 324 and will interfere constructively, whilst the symmetric modes in outgoing field of waveguide 324 will be out of phase and will interfere destructively.

Conversely, where the mirror 350 is displaced so as to achieve destructive interference between the symmetric modes in the outgoing field in waveguide 318 the antisymmetric modes will be in phase and will interfere constructively. Simultaneously in waveguide 324 the outgoing symmetric modes will interfere constructively and the antisymmetric modes will be absent.

In the above situation the mode set which is coupled to waveguide 324 may be used as a check on the modes which are produced in the output field of waveguide 318 i.e. the output from the mode converter 28. For example, if antisymmetric modes are to be output via waveguide 318 then waveguide 324 must contain symmetric modes, and vice versa. The waveguide 324 may have a detector array (not shown) opposite its output aperture 322 for the purpose of analysing the modes.

The previous argument demonstrates how the output radiation from the mode converter 28 can be selected to be either a symmetric or an antisymmetric mode and how the purity of a given mode can be maximized by choosing the tilt magnitudes on the mirrors 350 and 352 according to the expression $\theta = m\lambda_c/8a$. However, unless the input to the mode converter is a perfect plane wave the output at each of these settings may contain multiple modes and so there will be a further requirement to suppress the effects of unwanted modes. This is achieved as follows.

From the graph of Figure 4 it can be seen that for zero mirror tilt then the only mode generated in the fundamental mode $EH_{11}$. At 4.0 milliradians of mirror tilt the $EH_{31}$ is the dominant mode produced, but there are also small contributions from $EH_{51}$ and $EH_{11}$ modes. Antisymmetric modes are being ignored here, as these can be eliminated as previously described. By measuring the output of the analyzer with the mode converter 28 set with zero tilt of mirrors 350 and 352 then the amplitude of the fundamental mode $EH_{11}$ can be directly ascertained, as that is the only mode generated at zero tilt.

The amplitude of the $EH_{31}$ mode can be determined by measuring the output from the analyzer with the mirrors in the mode converter set to tilts of +2.5 milliradians. From Figure 4 the contribution of the $EH_{31}$ and $EH_{11}$ modes are substantially the same and all other symmetric modes have very low magnitudes. The amplitude of the $EH_{11}$ mode at 2.5 milliradians of mirror tilt can be determined from the previous measurement at zero tilt. From the graph of Figure 4 the amplitude of the $EH_{11}$ mode varies with mirror tilt in a known manner, and the amplitude at any tilt can then be found from the amplitude at zero tilt. As the $EH_{11}$ amplitude at 2.5 milliradians is known the contribution to the $EH_{31}$ mode signal can be deduced. Similarly, at 5.5 milliradians of mirror tilt the amplitude of the $EH_{51}$ mode can be determined, from knowledge of the previously determined $EH_{11}$ and $EH_{31}$ modes and of the output of the analyzer with the mirrors in the mode converter 28 set to this mirror tilt.

Similarly, from Figure 4, when the antisymmetric modes are selected by appropriate setting of the PZT the amplitude of the $EH_{21}$ mode can be found by measuring the output from the analyzer when the mirrors in the mode converter are set at +1.5 milliradians of tilt. Here, the mode converter output is mostly due to the $EH_{21}$ mode, with $EH_{41}$ having only a small contribution. At +4.0 milliradians the contributions from $EH_{21}$ and $EH_{41}$ are the same with the amplitudes of all other antisymmetric modes being extremely small. By measuring the output from the analyzer in this situation and compensating for the contribution of the $EH_{21}$ mode the amplitude (i.e. modulus) of the $EH_{41}$ mode can be deduced.

From the foregoing it can be seen that the scene radiation field received by the analyzer can be characterized in terms of the individual modes present, by arranging for only symmetric or antisymmetric modes to be produced and by a knowledge of the modes generated at various tilt angles or mirrors 350 and 352.

The foregoing has been concerned with the generation of $EH_{m1}$ modes. This is achieved by tilting mirrors 350 and 352 about their vertical axes and in the same sense. The $EH_{1n}$ modes can be generated by rotating mirrors 350 and 352 about their horizontal (y or x) axes and in the same direction (the requirement for the rotations to be of the same sense arise from the fact that the reflection from the beam splitter inverts the image). The resultant mode graphs are substantially identical to those of Figures 4 and 5, but with the "n" numbers varying whilst the "m" number is fixed at 1.

Higher order modes with both m and n greater than 1 can also be generated by the mode converter 28. This can be achieved simultaneously tilting the mirrors 350 and 352 about both their horizontal and vertical axes. The $EH_{mn}^{th}$ mode is obtained by tilting the mirrors 350 and 352 to the required tilt about the vertical axis for the $m^{th}$ mode, as was done in relation to Figure 4, and about the horizontal axis for the appropriate tilt for $n^{th}$ mode. For these higher order modes, the mirrors 350 and 352 must be tilted about their horizontal axes with opposite senses, whilst the tilts about their vertical axes should have the same sense.

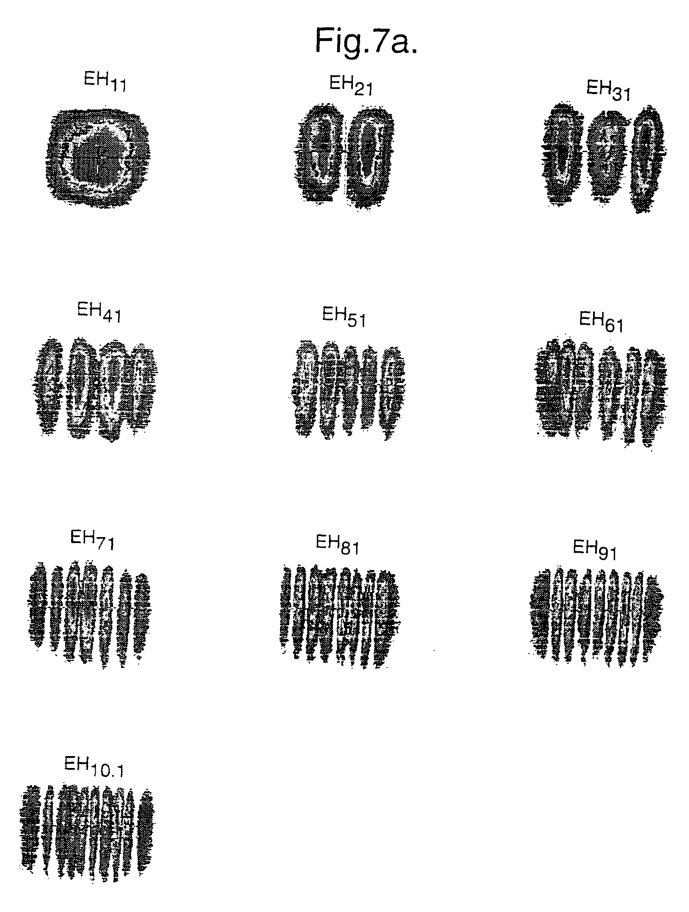

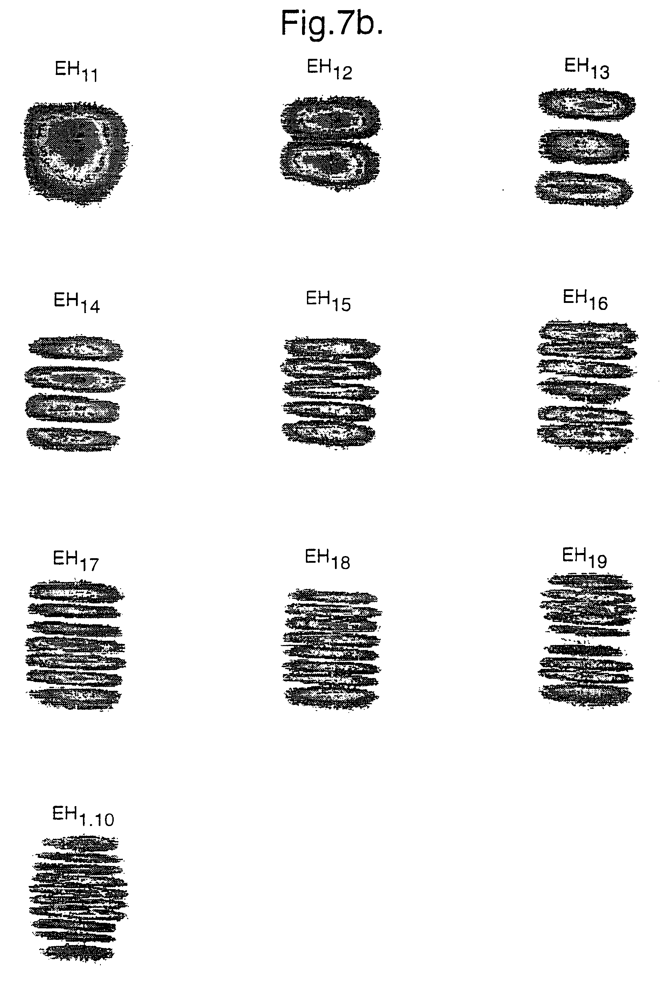

Figures 7a and 7b are illustrations of the mode outputs produced by the mode converter 28 at differing settings. Figure 7a shows the radiation intensity patterns output from waveguide 316 when the mode converter 28 was set to produce modes $EH_{11}$ up to $EH_{10,1}$. For example, the $EH_{41}$ intensity pattern has a horizontal row of four intensity peaks. Figure 7b shows the radiation patterns output from the waveguide 316 when the mode converter 28 was set to produce modes $EH_{11}$ up to $EH_{1,10}$. As an example, the $EH_{17}$ pattern has a vertical column of seven intensity peaks. The fundamental mode $EH_{11}$ consists of a single central intensity peak. In general, intermediate mode patterns have various combinations of columns and rows of intensity peaks. The $EH_{mn}^{th}$ mode has mxn intensity peaks.

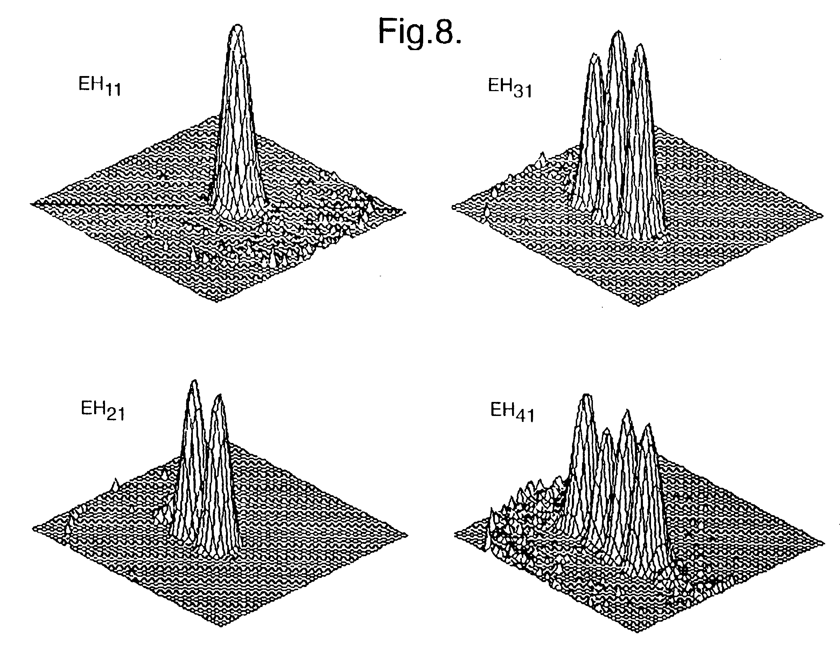

Figure 8 shows quasi three dimensional profiles of four of the modes produced by the mode converter 28, the modes being $EH_{11}$, $EH_{21}$, $EH_{31}$, and $EH_{41}$. It can be seen that these modes have respectively, one, two, three and four, intensity peaks.

The radiation from the mode converter 28 couples into the conversion waveguide 16 via aperture 26. The multimode radiation from the scene couples into the transmit/receive waveguide 18 via aperture 30. The radiation in the respective conversion waveguide 16 and transmit/receive waveguide 18 propagates towards the 50:50 beamsplitter 38.

The radiation from the scene is composed of a linear combination of $EH_{pq}$ modes with respective complex amplitude $A_{pq}\exp(i\phi_{pq})$. The $EH_{pq}$ modes are produced by an input optical field, $E_{input}$, coupling to the waveguide 18 at aperture 26. Consequently, $E_{input}$ can be represented by the $E_{pq}$ modes as

$$E_{input} = \sum A_{pq} \exp\left(i\,\phi_{pq}\right) EH_{pq}$$

Essentially, the waveguide 18 carries out a Fourier analysis of the optical field $E_{input}$ at its entrance aperture 26. The complex amplitudes are then the coefficients of the Fourier series and the modes excited in the waveguide 18 are a modal representation of the field from the scene.

The radiation modes in waveguides 16 and 18 are now mixed together at the beamsplitter 38. By moving the mirrors 350 and 352 of the mode converter simultaneously through a sinusoidally varying displacement of maximum amplitude, Y, for each $EH_{rs}$ setting of the mode converter a beat signal is produced on the detector. A displacement of at least 2.65 µm, brought about by the application of a sinusoidally varying voltage being applied to the piezo-electric transducers, is necessary in order to ensure that the phase of the $EH_{rs}$ mode from the converter changes by $\pi$ radians.

The coherent beating of an $EH_{rs}$ mode from the converter and the mode spectrum from the scene results in a beat field which is propagated along the detector waveguide 20. It emerges from aperture 32 and is detected at detector 34. Under these conditions, the time varying 2D intensity profile produced on the detector 34 is given by:

$$I_b\left(x,\,y,\,t\right) = \left[\frac{A_{pq}}{\sqrt{2}}\,EH_{pq}\right]^2 + \left[\frac{A_{rs}}{\sqrt{2}}\,EH_{rs}\right]^2 + \frac{A_{pq}}{\sqrt{2}}\,EH_{pq}\,\frac{A_{rs}}{\sqrt{2}}\,EH_{rs}\,\cos\left(\omega t + \rho\right)$$

Here $A_{pq}$ and $A_{rs}$ are the moduli of the complex amplitudes of the modes in the scene field and those produced by the mode generator, respectively, and $\rho$ is the difference of their arguments, $(\rho_{pq} - \rho_{rs})$, i.e. their phase difference. By integrating over the waveguide cross-section the time variable component of the power falling onto a detector which captures all the radiation emanating from the guide, is given as:

$$P_b = 2\,\frac{A_{pq}}{\sqrt{2}}\,\frac{A_{rs}}{\sqrt{2}}\,\cos\left(\omega t + \rho\right)\int_{-a}^{+a}\int_{-b}^{+b} EH_{pq}\left(x,y\right)\,EH_{rs}\left(x,y\right)\,dx\,dy$$

and the peak-to-peak value of $P_b$ as:

$$P_{b_{pk-pk}} = 4\,\frac{A_{pq}}{\sqrt{2}}\,\frac{A_{rs}}{\sqrt{2}}\int_{-a}^{+a}\int_{-b}^{+b} EH_{pq}\left(x,y\right)\,EH_{rs}\left(x,y\right)\,dx\,dy$$

Because of the orthogonal nature of the waveguide modes the integral term and hence the peak-to-peak amplitude of $P_b$ will only be non-zero when the modes are of the same order, i.e. p = r and q = s, simultaneously. Under this condition the value of the peak-to-peak amplitude of $P_b$ coupled with a knowledge of the magnitude of $A_{rs}$, allows direct evaluation of, $A_{pq}$, the modulus of the complex amplitude of the mode $EH_{pq}$. Furthermore, by making comparative measurements of the relative phase offsets between the sinusoidal variation of $P_b$ and the piezo-electric modulator drive signal, for different mode settings of the mode tunable local oscillator, the relative phase differences between the modes can also be established. In this manner the complex amplitude of each mode in the input field can be measured hence the complete form of the field can be deduced.

In practice the accurate measurement of the relative phases of the modes in the input field is based on two important assumptions.

(i) That the waveguide optical path length between the entrance aperture of the waveguide (into which the field which is to be analyzed is imaged) and the detector is equal to the waveguide optical path length between the output from the mode converter and the detector. If this were not the case, corrections would have to be made to the measurements based on the mode dispersion equation.

(ii) That the individual modes produced at the output plane of the mode converter all have the same relative phase. If this were not the case the relative phase offsets would have to be established in an initial set-up procedure. This could be based on the injection of a known input field, e.g. the $EH_{11}$ field returned from a tilted mirror. The values of the phase offsets deduced in this manner could either be used to correct the measured data in the computational phase of the field analysis process. Alternatively the phase offset data could be used to establish zero phase offsets between the generated modes by applying suitable d.c. offset voltage levels to the phase modulator in the mode converter for each mode generated. This process is analogous to the "phase up" procedure which has to be undertaken in phased array receivers in order to ensure that the phases of the local oscillator signals applied to the mixing points behind each subaperture are the same.

The analyzer 10 may be calibrated before use by locating a target mirror (not shown) at the aperture 30 of transmit/receive waveguide 18. The mirror can be tilted to generate the modes analogous to those of Figure 4. Consequently the relative phases of the modes propagating in waveguide 18 can be deduced from the output of detector 34, by beating the $EH_{mn}$ modes from the converter 28 with the modes generated by the target mirror. The amplitude and phase of the modes generated by the converter 28 are known, and the amplitude of modes generated by the target mirror are also known. This enables the relative mode phases to be deduced.

A calibration procedure which would take account of phase offsets between the modes generated by the mode converter is now considered in more detail. With reference to Figure 1 consider the situation where a target mirror placed at the aperture 30 is tilted by -4.0 milliradians about the z-axis. From Figure 4 it is known that this results in excitation of modes $EH_{11}$, $EH_{21}$, $EH_{31}$, $EH_{41}$, and $EH_{51}$. The mode converter is tuned to $EH_{11}$ and the phase difference, $\chi_1$, between a sample of the drive signal applied to the phase modulator in the mode converter and the output from the detector is measured. In practice this could be done with an oscilloscope. The mode converter is then tuned to provide the mode $EH_2$ and the phase difference measurement is repeated. The result this time is a value $\chi_2$. From Figure 5 it is known that $\chi_2 - \chi_1$ should equal 270°, the correction to $\chi_2$ is defined as $\chi_{2c}$, and evaluate it such that $\chi_2 + \chi_{2c} - \chi_1 = 270°$. The value of $\chi_{2c}$ is recorded. In an analogous manner the phase corrections for the other modes excited by this value of tilt magnitude are evaluated. The target mirror is now tilted by -9.0 milliradians, this results in excitation of modes $EH_{51}$, $EH_{61}$, $EH_{71}$, $EH_{81}$ and $EH_{91}$. This value of tilt was chosen to include $EH_{51}$ which occurred in the first data set. Measurements of the relative phase offsets with respect to $EH_{11}$ from the initial set of measurements which included $EH_{11}$ and $EH_{51}$. The strategy of overlapping the sets of modes for which measurements are made is important because in moving from one value of mirror tilt to another, unless the axis of rotation runs exactly through the waveguide axis, which is unlikely in practice, an axial shift of the mirror surface is also effected which introduces and additional unknown phase shift.

Tilts of the target mirror about the orthogonal x-axis and compound tilts about both the horizontal and vertical axes allow access to a large mode spectrum. In this context, as described earlier, the value of mirror tilt required to excite a given set of modes is to a good approximation given by, $\theta = n\lambda/8a$, where, n is the number related to the mode at the centre of the set and, a, is the half width of the waveguide. For example if it is desirable for $EH_{31}$ to be the centre of the set then n = 3, and with $\lambda = 10.6$ μm and a = 1.0 mm, this gives $\theta = 4$ milliradians as used earlier. If it is desirable for mode $EH_{33}$ to be at the centre of the set excited, the mirror would be tilted by 4.0 milliradians about both the x and z axes. With a computer controlled mirror mount and suitable interface electronics the whole set-up process could be automated.

If it were desirable to analyze the tilted input field at any value of tilt magnitude illustrated in Figure 4 then a mode tunable local oscillator would be needed which would at least produce modes $EH_{11}$ to $EH_{51}$. It would then be necessary to make moduli and phase measurements for each of the five modes in turn. Because of the unique nature of the input field it is interesting to note that any point in the range the maximum number of modes simultaneously excited is, five. Images of real objects are likely to result in much more complex mode spectra in terms of both the numbers and orders of the modes excited. The resolution with which such images could be analyzed will depend on a number of factors, these include:

(i) the highest order mode accessible with the mode tunable local oscillator,

(ii) the purity of the modes it produces, and

(iii) the accuracy with which the modal amplitude and phase measurements can be made. With temporally varying fields another important factor will be the time taken for the measurement to be made. This will depend on the number of modes the analysis is made with and the time taken for each measurement. The latter will itself depend on how quickly the peak-to-peak value of $P_b$ can be evaluated and this in turn will be a function of the phase modulation frequency. Signal to noise issues are also likely to effect overall measurement resolution and time.

Because the approach to field analysis described is reliant on performing sequential measurements on each of the modes that the local oscillator can be tuned through, although potentially very fast, it is inherently slower than a phased array which in principle is real time. However, the mode analysis approach has significant technological advantages over the phased array in that it only requires a single aperture and a single detector to form a very sophisticated coherent field measuring system. As such it might well be possible to upgrade existing single aperture, single detector systems, with the addition of a mode tunable local oscillator. Additionally, the fact that the complex mode amplitude outputs from the system provide a direct Fourier transform of the object field, could have significant advantages as far as image processing, pattern recognition and data storage are concerned. In the context of increasing the speed of measurements it is possible to conceive systems where several local oscillators running on different modes are used to make simultaneous measurements of the different spatial components of a field. In relation to phased array systems the modal analysis approach might also be used to provide improved resolution behind each sub-aperture. Hybrid systems based on a combination of phased array and modal analysis techniques might lead to new approaches to coherent receiver design.

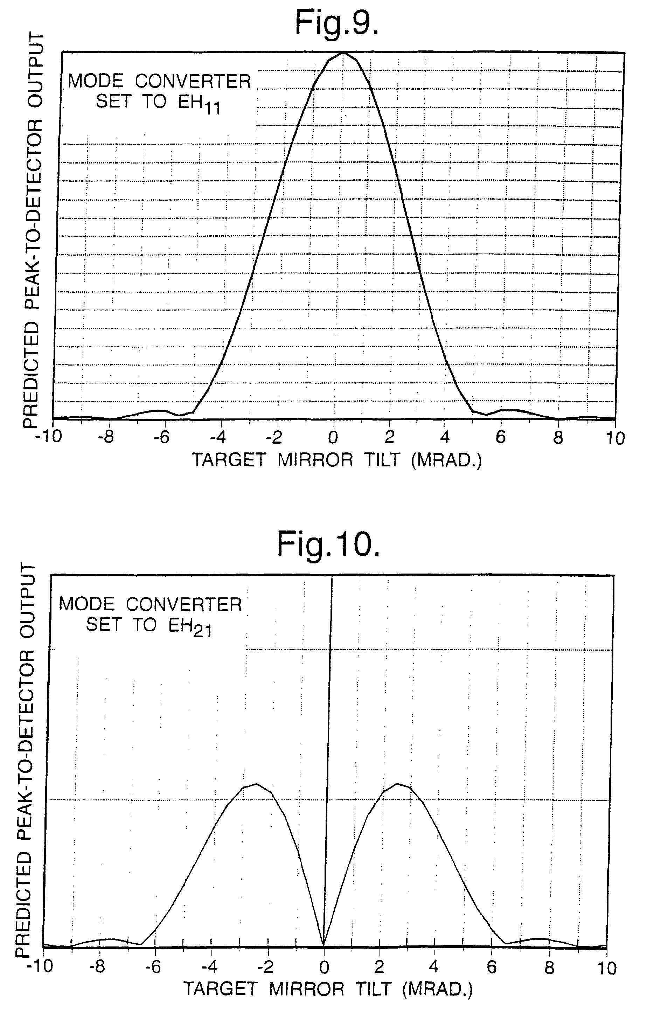

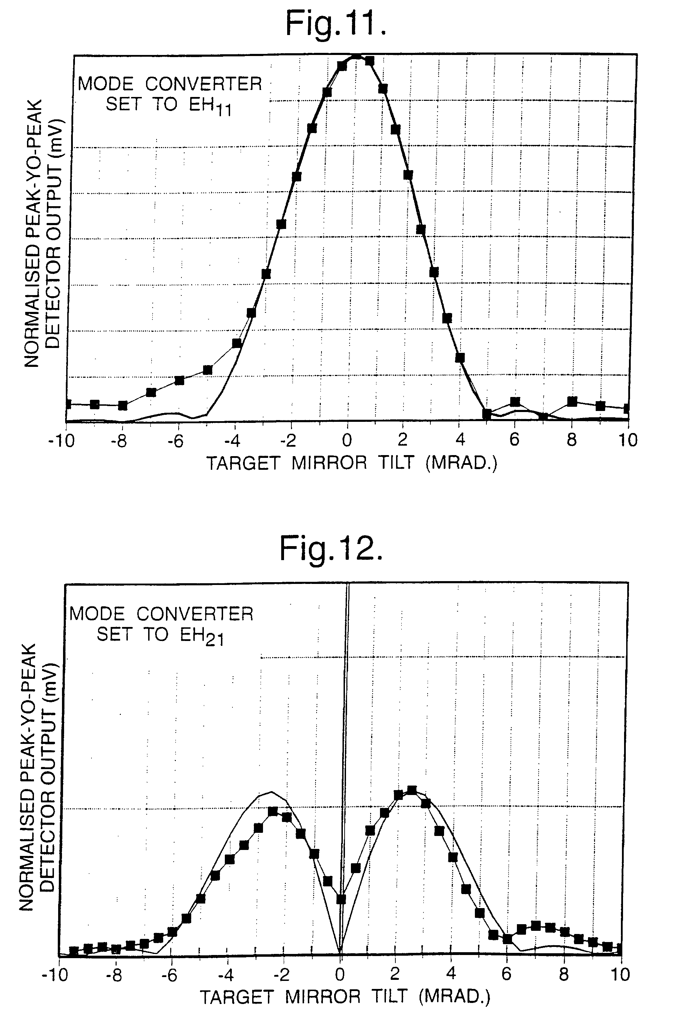

Figures 9 and 10 show predictions of the way in which the peak-to-peak amplitude of the beat signal received by the detector 34 would vary if the scene was itself a mirror placed at the exit of waveguide 18 and was tilted from -10 milliradians to +10 milliradians. Figure 9 relates to the case where the mode converter was set to produce the fundamental $EH_{11}$ mode, whilst in Figure 10 the mode converter is set to generate the mode $EH_{12}$. It can be seen that signal maxima are recorded at the target mirror tilt angles which maximize the coupling to the mode which the mode converter is tuned to. Figures 11 and 12 illustrate comparisons of the theoretical predictions illustrated in Figures 9 and 10 with experimentally generated results for the case where the mode converter is tuned to $EH_{11}$ and $EH_{21}$ respectively.

Different designs of mode converter based on multimode waveguides are possible. Essentially, the mode converter design described herein is a multimode waveguide version of the Michelson interferometer. The interferometer serves the purpose of allowing the fundamental mode input field to be split into two components which are then given appropriate tilt magnitudes of opposite senses, before being recombined. A multimode waveguide version of the Mach-Zehnder interferometer could provide a similar function. In the Michelson and Mach-Zehnder versions of the mode converter, improved mode purity can be achieved by increasing the waist size of the $TEM_{00}$ input beam. The generated modes would be perfect if the input field was a plane wave. However, in the case of $TEM_{00}$ input fields where the input beam waist, w, is greater than 0.7a, the waveguide optical path length between the input plane and the fully reflecting tiltable mirrors must be an integer multiple of the length of multimode waveguide required to provide input field regeneration. This length of multimode waveguide is given as, $L = (2a)^2/\lambda$, for a hollow dielectric waveguide.

The most general implementation of the mode generation process is achieved by launching two plane wave beams of opposite tilts and with an appropriate phase offset between them into a multimode waveguide. The waveguide could be of zero length, i.e. an aperture. The tilted beams may be produced by acousto-optic or electro-optic modulators. In these embodiments, the processes of scene illumination, mode generation and field analysis could be simplified if they were to be performed independently. In such embodiments, the output from a laser source could be split into major and minor components. The major component would be used to illuminate the scene whilst the minor component would act as the input to a mode generator. The output from the mode generator would then be mixed with the field returned from the scene in a separate multimode interferometer such that the mode analysis could be performed.

Other ways of generating the required spectrum of mode for the mode tunable local oscillator are also possible. For example the tunable mode converter 28 may be replaced by a waveguide laser with a square cross section providing controllable multimode output. Higher order modes can be generated by varying the way in which the gain medium is pumped, by tilting the resonator mirrors, by varying the cavity length and by placing a moveable grid of wires over the resonator mirrors. In this configuration a separate laser source 24 operating on the fundamental quasi-Gaussian mode would be used to illuminate the scene. If the laser source 24 and the mode tunable laser are stabilized in order to prevent relative drift in their frequencies, they could be frequency offset with respect to one another in order to generate a know high frequency beat signal. The fact that the different laser modes of the mode tunable laser will have different oscillation frequencies will also mean that the mode that the mode tunable laser is running on can be identified from the beat frequency. This could be used as a discriminant in order to lock the mode tunable laser to a given mode. For example, if the mode output of the laser changed as a function of the voltage applied to a piezoelectric cavity length controller, an electronic feedback circuit could be designed to keep the cavity length at a value that produced a given beat frequency and hence a given transverse mode.

The concept has been described in the context of mixing the modes generated by the mode generator/converter together with the field to be analyzed in a multimode waveguide structure and then detecting the resultant field on a detector placed at the exit of the multimode waveguide. The mixing process need not be undertaken in a multimode waveguide. Mixing could be arranged to occur on a multidielectric etalon mounted in free space with the resultant field detected on the face of a detector mounted in free space. In order for this embodiment to operate correctly the modes generated in the mode converter/generator would need to be accurately imaged onto the detector. In order to understand this embodiment it is useful to think of the detector as a multimode waveguide of zero length.

The embodiments described so far have only considered field analysis in the context of the orthogonal modes of square sectioned waveguides. Analysis could be undertaken with the more general class of modes of rectangular sectioned waveguides or the Bessel modes of circular cross sectioned waveguides. Any waveguide which supports a power orthogonal set of modes could be used as the basis of an analyzer.

The embodiments described so far have only considered field analysis in the context of power orthogonal waveguide modes. Analysis can be undertaken in terms of any set of power orthogonal optical field functions which can be generated. These could be the Hermite-Gaussian modes defined in relation to a rectangular coordinate free space system, or the Laguerre-Gaussian modes of a cylindrical coordinate free space system. In these implementations the lateral extent of the modes varies with their order. The higher the order of the mode the larger its width. In this case the detector would need to be large enough to capture the highest order mode that was required for the analysis. This differs from the waveguide mode implementations were the lateral extent of all modes is defined by the waveguide cross section.

The embodiments described so far have only considered field analysis where the analysis process is undertaken in a multimode waveguide or free space version of the widely used Michelson interferometer. Other forms of interferometer can be used to perform the field analysis process, including both multimode waveguide and free space versions of the Mach-Zehnder interferometer. The use of Mach-Zehnder type interferometers solely based on multimode waveguides is also possible. Here, a suitably design multimode waveguide takes the place of the etalon in the embodiment described herein. The resulting all-waveguide interferometer has two multimode input waveguides to carry: (i) the field to be analyzed, and, (ii) the output from the mode converter/generator. These input guides feed into another wider multimode waveguide section which provides the mixing function. The resultant fields of the mixing process are carried out in two multimode output guides. A detector placed at the exit of one would be used to make the beat measurements. The all-waveguide form of interferometer could also be used as the basis of a mode generator/converter. In integrated optic implementations of the all-waveguide mode generator/converter electro-optic phase modulators or SAW devices could be used to generate the linear phase shifts produced by the tilted mirrors in the embodiment described in detail herein. Such modulators could also be used to provide a frequency offset between the output from the mode converter and the scene field to be analyzed.

The analyzer 10 may be incorporated in an array of like analyzers. The array may be arranged to receive reflected radiation from a scene. Each individual analyzer such as 10 may be arranged to generate a set of modes in its mode converter such as 28. For example, the analyzer 10 may be arranged to detect modes $EH_{11}$ to $EH_{10}$, whereas a second analyzer may be arranged to detect modes $EH_{21}$ to $EH_{2,10}$ etc. This enables more rapid analysis of modes reflected from a scene. Such an application may be particularly useful for surveillance work, where the nature of a scene must be analyzed rapidly.

An array of analyzers in which each was arranged to detect a full spectrum of modes, could also act as an alternative form of phased array receiver. In this arrangement, the field resolution at any sub-aperture, and hence the resolution of the complete array, would be significantly better than that achievable with a conventional phased receiver array based on the sole use of fundamental mode local oscillators at each sub-aperture.

In the multimode waveguide embodiments of the concept described so far, the multimode waveguides have been hollow in nature and have cross sections of millimetres. In such waveguides there is an air core surrounded by a dielectric cladding. For 10.6 $\mu$m radiation from a $CO_2$ laser source, polycrystalline alumina is a good cladding material in terms of creating low loss waveguides because of its appropriate complex refractive index properties (i.e. n<1 at 10.6 $\mu$m). When using such dielectric materials, the hollow multimode waveguide structure may be fabricated from a series of plates of the dielectric material. Alternatively, it may be formed from a block of the dielectric material, with the waveguides being etched or machined into the block.

Hollow waveguide integrated optic structures have been constructed from solid pieces of polycrystalline alumina obtained from Kyocera Ltd of Japan using a computer numerical control (CNC) machining process to form both hollow waveguides and the slots to take optical components, such as the beam splitter 38 and the beamsplitter 348. The CNC machining was carried out in a two stage process. In a first stage, using a coarse milling process, the bulk of the excess alumina was removed. In a second stage, a jig grinder was used to obtain the final finish. Using this two stage process, component alignment slots could be produced with angular alignment tolerances of $\pm$ 0.5 mrad, and hollow waveguides could be constructed which maintained fundamental mode fidelity to a degree in excess of 98% (defined in terms of guide to guide coupling) for 2.0 mm wide waveguides.

The multimode waveguides need not be hollow waveguides, they can be solid core waveguides with a solid cladding. In such waveguides the refractive index ratios between the core and cladding are arranged to as to allow the waveguide to support many modes. GaAs/AlGaAs waveguides can be designed to be multimode. The waveguide structures are etched into a suitably designed epitaxial layer using ion beam assisted etching techniques. GaAs/AlGaAs waveguides of a few micrometers cross section can be designed to support many modes. In this context, it is interesting to note that, as the field resolution achieved with the analyzer concept described herein is dependent on the highest order mode that a measurement can be undertaken for, and not the lateral extent of the detector used to make the measurement; systems based on small dimension waveguides which support a good spectrum of higher order modes could provide very high resolution field analysis capabilities. Such analyzers could be useful for coherent microscopy, and could also be very useful for making field measurements at points in the electromagnetic spectrum where small dimension detector arrays are not available.

In the embodiments described so far the radiation has been 10.6 $\mu$m radiation from a $CO_2$ laser source. In principle with the right optical/waveguide technologies and laser/maser sources, the underlying concepts are applicable across the electromagnetic spectrum.

Implementation of the underlying concepts need not be solely based on the use of laser sources. Narrow linewidth quasi-coherent light sources can be used as an alternative to a laser. In this context light from distant astronomical objects can also be analyzed in a suitable implementation of the analyzer. In such an implementation there would be two receiver apertures. The received light from one would be modally filtered in order to provide a fundamental mode input for the mode converter. The output from the mode converter would be mixed with the field received from the other aperture. As the fundamental mode content of the input to the mode converter would vary due to variations in the fundamental mode component of the received field, this would have to be monitored and used to apply a suitable correction to mode amplitude measurements.

In a further embodiment, an analyzer can be arranged to act as a transmitter. By suitable control of the relative mode amplitudes and phases at the outputs of the analyzer, a transmitted beam can be produced from a suitable sum of independently generated $EH_{mn}$ modes.

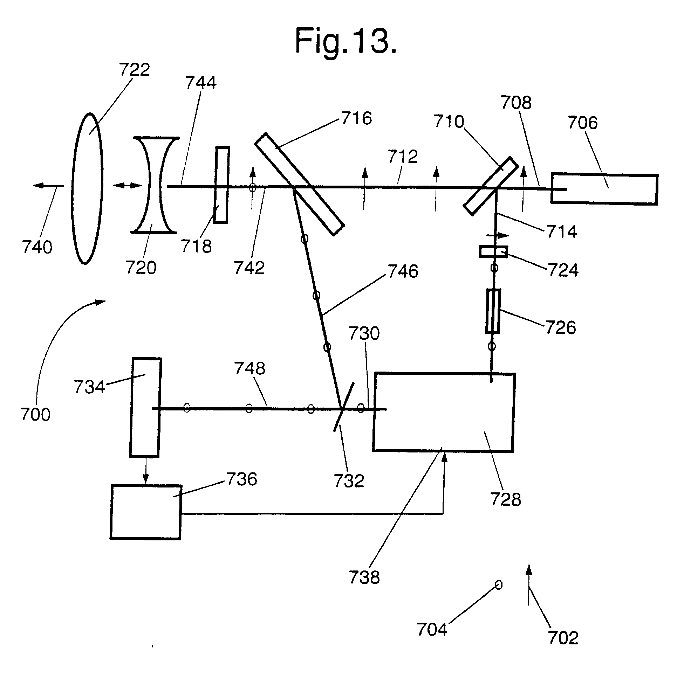

Referring now to Figure 13, there is shown a laser radar system indicated generally by 700 incorporating a radiation field analyzer of the invention. Polarization directions of radiation beams within the system 700 are indicated by arrows 702 and circles 704, which correspond respectively to linear polarization in the plane of the drawing and perpendicular to it. The system 700 incorporates a $CO_2$ laser source 706 with an output radiation beam 708 of approximately 5 watts power, having a 10.6 $\mu$m free-space wavelength and having a beam diameter of 2 mm. A beam splitter 710, fabricated from a plate of zinc selenide onto which a multidielectric coating has been vacuum-evaporated, lies in the path of the beam 708 and defines transmitted and reflected beams 712 and 714 with respective intensities in the ratio of 9 to 1. In the path of the transmitted beam 712 lies a zinc selenide plate 716 inclined to the path at the Brewster angle, a quarter-wave plate 718, and a telescope arrangement of concave and convex lenses 720 and 722.

In the path of the reflected beam 714 lie a half-wave plate 724, an acousto-optic modulator 726 and a tunable mode converter 728 which is similar to the mode converter 28 described earlier. The modulator 726 provides phase modulation of incident light at a phase modulation frequency of 60 MHz with modulation limits of $+\pi$ and $-\pi$ radians. The mode converter 728 has a mode controllable output beam 730 directed to a combiner plate 732 and a liquid-nitrogen cooled cadmium mercury telluride detector 734 having a bandwidth of 500 MHz. The detector 734 is connected to a signal processing unit 736 incorporating a computer (not shown) which is connected in turn to a mode control input 738 of the mode converter 728.

The radar system 700 operates as follows. The laser beam 708 is linearly polarised in the plane of the drawing, and is partly transmitted and partly reflected by the beam splitter 710. The transmitted beam 712 is incident on the zinc selenide plate 716 through which it is transmitted efficiently by virtue of its polarization direction to form an outward beam in a region 742 located between the plate 716 and the quarter-wave plate 718. The outward beam in the region 742 is subsequently transmitted through the quarter-wave plate 718 which changes the linearly-polarised outward beam into a circularly-polarised outward beam in a region 744 located between the quarter-wave plate 718 and the concave lens 720. The circularly-polarised outward beam in the region 744 is then magnified by the concave and convex lenses 720 and 722 to form a collimated coherent magnified beam 740. The beam 740 illuminates a remote scene (not shown) at a distance which may be of the order of 5 km. When the beam 740 is incident at a remote scene 5 km distant, its diameter is approximately 1 metre as a result of beam divergence. Incident coherent radiation is reflected or scattered from the remote scene and part of the reflected or scattered radiation re-enters the radar system 700 through the lenses 720 and 722 to form a return beam in the region 744; the intensity of the coherent radiation which re-enters the radar system 700 is approximately a few femtowatts. The return beam in the region 744 is then transmitted through the quarter-wave plate 718 which changes the circularly-polarised return beam in the region 744 to a linearly-polarised return beam in the region 742. The linearly-polarised return beam in the region 742 is subsequently incident on the zinc selenide plate 716 which reflects efficiently components of the return beam in the region 742 to form a reflected beam 746 which is orthogonally polarised relative to the outward beam in the region 742. The reflected beam 746 is incident on the combiner plate 732 from whence it is reflected into the detector 734 along a path 748.

The reflected beam 714 is transmitted through the half-wave plate 724, providing a polarization rotation of $\pi/2$ radians, after which it is transmitted through the acousto-optic modulator 726 into the mode converter 728. The mode converter 728 converts input radiation contained in the beam 714 into a series of different modes which are individually selected by a control signal applied to the mode control input 738. These modes are output to form the beam 730. The beam 730 is transmitted through the combiner plate 732 to be incident on the detector 734 where it creates interference with the beam 746 reflected from the combiner plate 732; radiation incident on the detector 734 creates an output signal which is conveyed to the signal processing unit 736. The effect of the acousto-optic modulator 726 applying a 60 MHz phase modulation to the reflected beam 714 is to create 60 MHz periodic-variations in the output signal at the detector 734; the difference between maximum and minimum intensities in the output signal at the detector 734 provides an indication of the magnitude of laser radiation reflected from the remote scene for a particular selected radiation mode generated by the tuneable mode converter 728 and for a given output power of the laser 706. The output signal generated at the detector 734 is conveyed to the processing unit 736 which analyzes the signal to provide output data corresponding to the difference between maximum and minimum radiation intensities for each of the modes which are selected by means of a control signal supplied to the mode control input 738 of the mode converter 728.

An advantage of this form of signal analysis as described above is that the average level of radiation incident upon the detector 734 is disregarded, although any random fluctuations in that average level, arising for example from any random fluctuations in the radiation power contained in the beam 708 emitted from the laser 706, will have the effect of degrading the signal-to-noise ratio of the output data described above. Thus, it is beneficial to try to minimise the coupling of radiation to the beam 746 which does not arise from reflection of coherent radiation from the remote scene; however, it is desirable to ensure that the power of the beam 730 emitted from the mode converter 728 is at least greater than the maximum power expected in the received radiation which is reflected from the remote scene and which re-enters the laser radar system 700 in order to ensure that the difference between maxima and minima in the signal from the detector 734 is proportional to the amount of reflected radiation from the remote scene and not limited by the available power in the beam 730 emitted from the tuneable mode converter 728. The power in the beam 730 may be in the order of 1 milliwatt to ensure that noise in the signal from the detector 734 arises predominantly from random power fluctuations in the beam 730 rather than from noise arising in the detector 734 itself. Satisfactory partitioning of the radiation in the beam 708 is achieved by selecting a suitable 9:1 splitting ratio for the beam splitter 710, and by incorporating the plate 716 and the quarter-wave plate 718 into the laser radar system 700 to isolate components of radiation exiting to and returning from the remote scene.

The tuneable mode converter 728 permits a particular spatial mode present in the radiation reflected from the remote scene to be selectively measured; interference signals are not produced at the detector 734 if the radiation modes existing in the beams 746 and 730 are dissimilar. Thus, the laser radar system 700 permits the mode type and energy contained within each mode present in the reflected radiation from the scene to be measured.

The two lenses 720 and 722 increase the diameter of the beam 712 approximately 20-fold such that the beam 740 is of approximately 5 cm diameter in order to reduce diffraction effects which would otherwise occur if a narrow beam of a few millimetres diameter were emitted towards the remote scene.

The laser radar system 700 as described above enables identification of features present in a remote scene at which the beam 740 is directed on account of the power and the modes contained in the reflected or scattered radiation which re-enters the radar system 700 from the remote scene characterising the features in the remote scene.

In a modified embodiment of the laser radar system 700, the tuneable mode converter 728 outputs a number of modes simultaneously at the output beam 730, rather than individual pure modes as described above; in this further embodiment, the modal composition of the beam 730 is varied by means of a control signal supplied to the mode control input 738 of the mode converter 728. The contribution made by each mode present simultaneously in the beam 730 to the interference signal measured at the detector 734 is then determined by making a series of measurements where the relative intensities of the modes present in the beam 730 are varied for each of the measurements. By means of a matrix calculation together with prior knowledge of the modal composition of the beam 730 for a given control signal supplied to the mode control input 738, the intensity of the individual modes present in the reflected radiation from the remote scene may be determined.

In yet another modified embodiment of the laser radar system 700, a beam scanning unit comprising actuated tiltable mirrors may be added between the lens 722 and the remote scene in order to enable the beam 740 to be scanned over an area of the remote scene which is larger than the diameter of the beam 740 at the remote scene. Moreover, a variable attenuator may be inserted between the mode converter 728 and the combiner plate 732 in order to enable the laser radar system 700 to cope with a large range of power, from femtowatts to milliwatts, contained in the reflected or scatter radiation which re-enters the laser radar system 700 through the lenses 720 and 722.

The underlying concepts herein described could also be used as the basis of a communications system wherein individual modes are modulated in phase, frequency, or amplitude before being multiplexed and transmitted through a multimode propagation medium. The information carried on each mode could then be extracted by means of coherent mixing with the appropriate output of a mode generator.

**Claims**

1. A radiation field analyser (10) for analysing at least partially coherent radiation from a scene, said analyser incorporating a radiation combiner (12) for providing interference signals and detecting means (34) for detecting the interference signals, **characterised in that**:

   (i) the combiner (12) is arranged to combine said received radiation from the scene with each of a plurality of orthogonal radiation mode fields to provide the interference signals, and
   (ii) the detecting means (34) is arranged to provide an analysis of the radiation from the scene in the form of a spatial mode spectrum.

2. A radiation field analyser according to Claim 1 **characterised in that** the radiation combiner comprises a multimode waveguide (12).

3. A radiation field analyser according to Claim 1 **characterised in that** the analyser includes a radiation converter (28) for generating the spatial radiation mode fields by converting radiation of at least one mode into radiation of differing modes.

4. A radiation field analyser according to Claim 3 **characterised in that** the radiation converter provides means for generating a set of spatial radiation mode fields from a fundamental mode input.

5. A radiation field analyser according to Claim 3 **characterised in that** the radiation converter incorporates at least one mirror (350) arranged for rotation about two axes to generate a set of radiation mode fields.

6. A radiation field analyser according to Claim 5 **characterised in that** the analyser incorporates at least two such mirrors (350, 352).

7. A radiation field analyser according to Claim 6 **characterised in that** the radiation converter comprises means for selectively generating symmetric or antisymmetric modes fields.

8. A radiation field analyser according to Claim 6 or Claim 7 **characterised in that** the radiation converter is arranged to generate a signal of substantially one radiation mode field at any one particular time.

9. A radiation field analyser according to Claim 3 **characterised in that** the radiation converter comprises means for launching two appropriately tilted and phase offset light beams into a single multimode waveguide.

10. A radiation field analyser according to any one of Claims 1 to 9 **characterised in that** the analyser includes a main laser source (24) arranged to illuminate the scene through the radiation combiner.

11. A radiation field analyser according to any preceding claim **characterised in that** the radiation combiner is arranged to generate the interference signals by phase modulating the spatial radiation mode fields with respect to the radiation received from the scene.

12. A radiation field analyser according to Claim 1 **characterised in that** the radiation combiner incorporates a dielectric beam splitter (38).

13. A radiation field analyser according to Claim 1 or Claim 2 **characterised in that** the radiation combiner comprises a multimode waveguide interference coupler.

14. A radiation field analyser (732, 728) according to Claim 3 **characterised in that** the analyzer is incorporated within a laser radar system (700), the radar system further comprising a source (706) of laser radiation for illuminating a scene and for providing the radiation converter (728) with a reference signal (714), means (722, 720, 718, 716) for receiving radiation reflected by the scene and for inputting said received radiation to said analyzer, and processing means (736) for performing a modal analysis on said received radiation.

**15.** A radiation field analyzer (10) for analysing at least partially coherent radiation from a scene incorporating processing means (12) for providing interference signals and detecting means (34) for detecting the interference signals, **characterised in that** the processing means is integrated and arranged to combine said received radiation from the scene with each of plurality of orthogonal spatial radiation mode fields to provide the interference signals, and the detecting means is arranged to provide an analysis of the radiation from the scene in the form of a spatial mode spectrum.

**16.** A radiation field analyser according to Claim 15 **characterised in that** the processing means (12) comprises one or more optical components (38) for combining said radiation from the scene with said orthogonal radiation modes fields to provide the interference signals, and one or more waveguide structures (14, 16, 18, 20) for guiding said radiation and radiation mode fields to and from the optical components (38).

**17.** A radiation field analyser according to Claim 16 **characterised in that** the processing means (12) comprises one or more elements (210, 213, 214) of unitary construction which implement the waveguide structures and which incorporate locating means for locating the optical components (38).

**18.** A radiation field analyser according to Claim 17 **characterised in that** the elements (210, 213, 214) comprise alumina material.

**Patentansprüche**

**1.** Strahlungsfeldanalysator (10) zum Analysieren von wenigstens teilweise kohärenter Strahlung von einer Szene, wobei der Analysator einen Strahlungskombinierer (12) zum Schaffen von Interferenzsignalen und Erfassungsmittel (34) zum Erfassen der Interferenzsignale enthält, **dadurch gekennzeichnet, daß**:

(i) der Kombinierer (12) so beschaffen ist, daß er die von der Szene empfangene Strahlung mit jedem von mehreren Feldern mit orthogonalen Strahlungsmoden kombiniert, um die Interferenzsignale zu schaffen; und
(ii) die Erfassungsmittel (34) so beschaffen sind, daß sie eine Analyse der Strahlung von der Szene in Form eines Spektrums räumlicher Moden schaffen.

**2.** Strahlungsfeldanalysator nach Anspruch 1, **dadurch gekennzeichnet, daß** der Strahlungskombinierer einen Mehrmoden-Wellenleiter (12) enthält.

**3.** Strahlungsfeldanalysator nach Anspruch 1, **dadurch gekennzeichnet, daß** der Analysator einen Strahlungsumsetzer (28) zum Erzeugen der Felder mit räumlichen Strahlungsmoden enthält, indem Strahlung mit wenigstens einem Modus in Strahlung mit verschiedenen Moden umgesetzt wird.

**4.** Strahlungsfeldanalysator nach Anspruch 3, **dadurch gekennzeichnet, daß** der Strahlungsumsetzer Mittel bereitstellt, um aus einem eingegebenen Grundmodus eine Menge von Feldern mit räumlichen Strahlungsmoden zu erzeugen.

**5.** Strahlungsfeldanalysator nach Anspruch 3, **dadurch gekennzeichnet, daß** der Strahlungsumsetzer wenigstens einen Spiegel (350) enthält, der für eine Drehung um zwei Achsen ausgebildet ist, um eine Menge von Feldern mit Strahlungsmoden zu schaffen.

**6.** Strahlungsfeldanalysator nach Anspruch 5, **dadurch gekennzeichnet, daß** der Analysator wenigstens zwei derartige Spiegel (350, 352) enthält.

**7.** Strahlungsfeldanalysator nach Anspruch 6, **dadurch gekennzeichnet, daß** der Strahlungsumsetzer Mittel umfaßt, um wahlweise Felder mit symmetrischen oder asymmetrischen Moden zu erzeugen.

**8.** Strahlungsfeldanalysator nach Anspruch 6 oder 7, **dadurch gekennzeichnet, daß** der Strahlungsumsetzer so beschaffen ist, daß er zu einem bestimmten Zeitpunkt ein Signal eines Feldes mit im wesentlichen einem Strahlungsmodus erzeugt.

**9.** Strahlungsfeldanalysator nach Anspruch 3, **dadurch gekennzeichnet, daß** der Strahlungsumsetzer Mittel umfaßt, um zwei in geeigneter Weise geneigte und mit einem Phasenversatz versehene Lichtstrahlen in einen einzelnen Mehrmoden-Wellenleiter einkoppelt.

10. Strahlungsfeldanalysator nach einem der Ansprüche 1 bis 9, **dadurch gekennzeichnet, daß** der Analysator eine Hauptlaserquelle (24) enthält, die geeignet ist, die Szene durch den Strahlungskombinierer zu beleuchten.

11. Strahlungsfeldanalysator nach einem der vorhergehenden Ansprüche, **dadurch gekennzeichnet, daß** der Strahlungskombinierer so beschaffen ist, daß er die Interferenzsignale durch Phasenmodulation des Feldes mit räumlichen Strahlungsmoden in bezug auf die von der Szene empfangene Strahlung moduliert.

12. Strahlungsfeldanalysator nach Anspruch 1, **dadurch gekennzeichnet, daß** der Strahlungskombinierer einen dielektrischen Strahlteiler (38) enthält.

13. Strahlungsfeldanalysator nach Anspruch 1 oder 2, **dadurch gekennzeichnet, daß** der Strahlungskombinierer einen Interferenzkoppler mit Mehrmoden-Wellenleiter umfaßt.

14. Strahlungsfeldanalysator (732, 728) nach Anspruch 3, **dadurch gekennzeichnet, daß** der Analysator in einem Laser-Radarsystem (700) enthalten ist, wobei das Radarsystem ferner eine Quelle (706) der Laserstrahlung zum Beleuchten einer Szene und zum Bereitstellen eines Referenzsignals an den Strahlungsumsetzer (728), Mittel (722, 720, 718, 716) zum Empfangen von Strahlung, die von der Szene reflektiert wird, und zum Eingeben der empfangenen Strahlung in den Analysator sowie Verarbeitungsmittel (736) zum Ausführen einer modalen Analyse an der empfangenen Strahlung umfaßt.

15. Strahlungsfeldanalysator (10) zum Analysieren von wenigstens teilweise kohärenter Strahlung von einer Szene, mit Verarbeitungsmitteln (12) zum Schaffen von Interferenzsignalen und Erfassungsmitteln (34) zum Erfassen der Interferenzsignale, **dadurch gekennzeichnet, daß** die Verarbeitungsmittel integriert und so beschaffen sind, daß sie die von der Szene empfangene Strahlung mit jedem von mehreren Feldern mit orthogonalen räumlichen Strahlungsmoden kombinieren, um die Interferenzsignale zu schaffen, und die Erfassungsmittel so beschaffen sind, daß sie eine Analyse der Strahlung von der Szene in Form eines räumlichen Modenspektrums schaffen.

16. Strahlungsfeldanalysator nach Anspruch 15, **dadurch gekennzeichnet, daß** die Verarbeitungsmittel (12) eine oder mehrere optische Komponenten (38) zum Kombinieren der Strahlung von der Szene mit den Feldern mit orthogonalen Strahlungsmoden, um die Interferenzsignale zu schaffen, und eine oder mehrere Wellenleiterstrukturen (14, 16, 18, 20) zum Leiten der Strahlung und der Strahlungsmodusfelder zu und von den optischen Komponenten (38) umfassen.

17. Strahlungsfeldanalysator nach Anspruch 16, **dadurch gekennzeichnet, daß** die Verarbeitungsmittel (12) ein oder mehrere baugleiche Elemente (210, 213, 214) umfassen, die die Wellenleiterstrukturen implementieren und Anbringungsmittel zum Anbringen der optischen Komponenten (38) enthalten.

18. Strahlungsfeldanalysator nach Anspruch 17, **dadurch gekennzeichnet, daß** die Elemente (210, 213, 214) Aluminiumwerkstoff enthalten.


**Revendications**

1. Analyseur de champ de rayonnement (10) pour analyser un rayonnement au moins partiellement cohérent provenant d'une scène, ledit analyseur comportant un combineur de rayonnement (12) pour délivrer des signaux d'interférence et des moyens de détection (34) pour détecter les signaux d'interférence, **caractérisé en ce que** :

    (i) le combineur (12) est conçu pour combiner ledit rayonnement reçu provenant de la scène avec chaque champ d'une pluralité de champs en mode de rayonnement orthogonal pour délivrer les signaux d'interférence ,et
    (ii) les moyens de détection (34) sont conçus pour fournir une analyse du rayonnement provenant de la scène sous la forme d'un spectre de modes spatiaux.

2. Analyseur de champ de rayonnement selon la revendication 1, **caractérisé en ce que** le combineur de rayonnement comporte un guide d'ondes multimode (12).

3. Analyseur de champ de rayonnement selon la revendication 1, **caractérisé en ce que** l'analyseur comporte un convertisseur de rayonnement (28) pour générer les champs en mode de rayonnement spatial en convertissant un rayonnement d'au moins un mode en un rayonnement de modes différents.

4. Analyseur de champ de rayonnement selon la revendication 3, **caractérisé en ce que** le convertisseur de rayonnement fournit des moyens pour générer un ensemble de champs en mode de rayonnement spatial provenant d'une entrée en mode fondamental.

5. Analyseur de champ de rayonnement selon la revendication 3, **caractérisé en ce que** le convertisseur de rayonnement comporte au moins un miroir (350) conçu pour une rotation autour de deux axes pour générer un ensemble de champs en mode de rayonnement.

6. Analyseur de champ de rayonnement selon la revendication 5, **caractérisé en ce que** l'analyseur comporte au moins deux de ces miroirs (350, 352).

7. Analyseur de champ de rayonnement selon la revendication 6, **caractérisé en ce que** le convertisseur de rayonnement comporte des moyens pour générer de manière sélective des champs en modes symétriques ou antisymétriques.

8. Analyseur de champ de rayonnement selon la revendication 6 ou 7, **caractérisé en ce que** le convertisseur de rayonnement est conçu pour générer un signal de pratiquement un champ en mode de rayonnement à tout instant particulier.

9. Analyseur de champ de rayonnement selon la revendication 3, **caractérisé en ce que** le convertisseur de rayonnement comporte des moyens pour projeter deux faisceaux lumineux déphasés et inclinés de manière appropriée dans un guide d'ondes multimode unique.

10. Analyseur de champ de rayonnement selon l'une quelconque des revendications 1 à 9, **caractérisé en ce que** l'analyseur comporte une source laser principale (24) conçue pour illuminer la scène à travers le combineur de rayonnement.

11. Analyseur de champ de rayonnement selon l'une quelconque des revendications précédentes, **caractérisé en ce que** le combineur de rayonnement est conçu pour générer les signaux d'interférence par modulation de phase des champs en mode de rayonnement spatial par rapport au rayonnement reçu depuis la scène.

12. Analyseur de champ de rayonnement selon la revendication 1, **caractérisé en ce que** le combineur de rayonnement comporte un diviseur de faisceau diélectrique (38).

13. Analyseur de champ de rayonnement selon la revendication 1 ou 2, **caractérisé en ce que** le combineur de rayonnement comporte un coupleur d'interférence à guides d'ondes multimodes.

14. Analyseur de champ de rayonnement (732, 728) selon la revendication 3, **caractérisé en ce que** l'analyseur est incorporé dans un système radar laser (700), le système radar comportant de plus une source (706) de rayonnement laser pour illuminer une scène et pour alimenter dans le convertisseur de rayonnement (728) un signal de référence (714), des moyens (722, 720, 718, 716) pour recevoir un rayonnement réfléchi par la scène et pour entrer ledit rayonnement reçu dans ledit analyseur, et des moyens de traitement (736) pour effectuer une analyse modale sur ledit rayonnement reçu.

15. Analyseur de champ de rayonnement (10) pour analyser un rayonnement au moins partiellement cohérent provenant d'une scène, comportant des moyens de traitement (12) pour délivrer des signaux d'interférence et des moyens de détection (34) pour détecter les signaux d'interférence, caractérisé en ce que les moyens de traitement sont intégrés et conçus pour combiner ledit rayonnement reçu provenant de la scène avec chaque champ d'une pluralité de champs en mode de rayonnement spatial orthogonal pour délivrer les signaux d'interférence, et les moyens de détection sont conçus pour fournir une analyse du rayonnement provenant de la scène sous la forme d'un spectre de modes spatiaux.

16. Analyseur de champ de rayonnement selon la revendication 15, **caractérisé en ce que** les moyens de traitement (12) comportent un ou plusieurs composants optiques (38) pour combiner ledit rayonnement provenant de la scène avec lesdits champs en mode de rayonnement orthogonaux pour délivrer les signaux d'interférence, et une ou plusieurs structures de guides d'ondes (14, 16, 18, 20) pour guider ledit rayonnement et des champs en mode de rayonnement vers et depuis les composants optiques (38).

17. Analyseur de champ de rayonnement selon la revendication 16, **caractérisé en ce que** les moyens de traitement (12) comportent un ou plusieurs éléments (210, 213, 214) ayant une structure unitaire qui implémente les structures de guides d'ondes et qui comportent des moyens de localisation pour localiser les composants optiques (38).

18. Analyseur de champ de rayonnement selon la revendication 17, **caractérisé en ce que** les éléments (210, 213, 214) comportent un matériau d'alumine.

# Fig.1.

SCENE

# Fig.2.

12

222

38

22    14    213    16    26    218

212    214    228    213
213    18
210    30
226    32    20    213    232    224

220

216    +z +x +y

21    EP 0 876 625 B1

Fig.3.

## Fig.4.

## Fig.5.

# Fig.6.

# Fig.7a.

$EH_{11}$

$EH_{21}$

$EH_{31}$

$EH_{41}$

$EH_{51}$

$EH_{61}$

$EH_{71}$

$EH_{81}$

$EH_{91}$

$EH_{10.1}$

# Fig.7b.

EH₁₁

EH₁₂

EH₁₃

EH₁₄

EH₁₅

EH₁₆

EH₁₇

EH₁₈

EH₁₉

EH₁.₁₀

Fig.8.

$EH_{11}$

$EH_{21}$

$EH_{31}$

$EH_{41}$

## Fig.9.

MODE CONVERTER SET TO $EH_{11}$

PREDICTED PEAK-TO-DETECTOR OUTPUT

TARGET MIRROR TILT (MRAD.)

## Fig.10.

MODE CONVERTER SET TO $EH_{21}$

PREDICTED PEAK-TO-DETECTOR OUTPUT

TARGET MIRROR TILT (MRAD.)

# Fig.11.

# Fig.12.

# Fig.13.